**Europäisches Patentamt**

(19) **European Patent Office**

**Office européen des brevets**

(11) Veröffentlichungsnummer: **0 026 834**
**B1**

(12) **EUROPÄISCHE PATENTSCHRIFT**

(45) Veröffentlichungstag der Patentschrift:
**20.11.86**

(51) Int. Cl.⁴: **G 01 C 3/08**

(21) Anmeldenummer: **80105066.7**

(22) Anmeldetag: **26.08.80**

(54) **Analog-Digital-Wandler zur Bewertung des Ausgangssignals eines optoelektronischen Sensorelements und Verfahren zu dessen Betrieb.**

(30) Priorität: **10.09.79 DE 2936492**

(43) Veröffentlichungstag der Anmeldung:
**15.04.81 Patentblatt 81/15**

(45) Bekanntmachung des Hinweises auf die Patenterteilung:
**20.11.86 Patentblatt 86/47**

(84) Benannte Vertragsstaaten:
**BE FR GB IT NL**

(56) Entgegenhaltungen:
**DE - A - 2 756 061**
**FR - A - 2 143 184**
**GB - A - 2 030 417**

**Prospekt 77144 der Firma Reticon Corporation Sunnyvale, California (1975)**

(73) Patentinhaber: **Siemens Aktiengesellschaft Berlin und München, Wittelsbacherplatz 2, D-8000 München 2 (DE)**

(72) Erfinder: **Herbst, Heiner, Dr., Anechostrasse 29a, D-8000 München 82 (DE)**
Erfinder: **Pfleiderer, Hans-Jörg, Dr., Franz-Krinninger-Weg 23, D-8011 Zorneding (DE)**

## Beschreibung

Die Erfindung bezieht sich auf einen Analog-Digital-Wandler zur Bewertung des Analogsignals eines optoelektronischen Sensorelements.

Auf einen Analog-Digital-Wandler zur Bewertung der analogen Ausgangssignale eines linearen Bildsensors ist in dem 1975 veröffentlichten Prospekt 77 144 der Firma Reticon Corp., Sunnyvale, Cal., hingewiesen, in dem die «Model LC 600 Digital Line Scan Camera» beschrieben ist. Überschreitet hierbei eines der Ausgangssignale der nacheinander abgefragten Sensorelemente einen vorgegebenen Schwellwert, so wird über den Wandler eine logische «1» abgegeben. Das nächstfolgende Ausgangssignal eines Sensorelements, das den Schwellwert nicht erreicht, führt dagegen zum Umschalten des Wandlers auf ein Ausgangssignal, das einer logischen «0» entspricht.

Der Erfindung liegt die Aufgabe zugrunde, einen Analog-Digital-Wandler der eingang genannten Art anzugeben, der eine sehr genaue Digitalisierung der analogen Sensorsignale weitgehend unabhängig von herstellungsbedingten Kennwerteschwankungen des Inverters ermöglicht. Diese Aufgabe wird durch die im Patentanspruch 1 gekennzeichneten Merkmale gelöst.

Der mit der Erfindung erzielbare Vorteil besteht insbesondere darin, dass Kennwertetoleranzen des Inverters die Digitalisierung nicht beeinflussen. Auch Toleranzen der Einsatzspannung des Barriere-Transistors werden weitgehend kompensiert, da über diesen sowohl ein Stromkreis zum Rücksetzen des Sensorelements als auch ein Stromkreis zum digitalen Bewerten des analogen Sensorsignals verläuft.

Die Unteransprüche 2 bis 7 geben bevorzugte Ausgestaltungen und Weiterbildungen des Wandlers nach der Erfindung an, während der Anspruch 10 eine bevorzugte Anwendung dieses Wandlers betrifft. Ansprüche 8 und 9 betreffen ein Verfahren zum Betrieb des beanspruchten Wandlers.

Die Erfindung wird nachfolgend anhand der in der Zeichnung dargestellten Ausführungsbeispiele näher erläutert. Dabei zeigt:

Fig. 1 ein erstes Ausführungsbeispiel,

Fig. 2 die Ausgestaltung einer Teilschaltung von Fig. 1,

Fig. 3 Spannungs-Zeit-Diagramme zur Erläuterung der Figuren 1 und 2,

Fig. 4 eine schaltungstechnische Alternative zur Fig. 2,

Fig. 5 eine zweite schaltungstechnische Alternative zu Fig. 2 und

Fig. 6 die schematische Darstellung einer Schaltung, in der der Analog-Digital-Wandler nach der Erfindung eingesetzt ist.

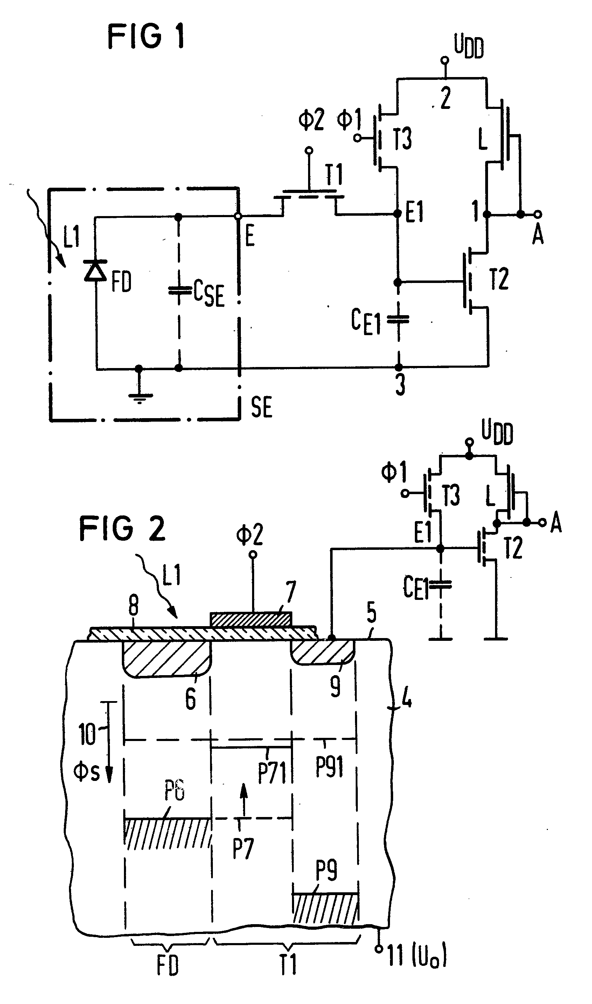

Fig. 1 zeigt die Prinzipschaltung eines Analog-Digital-Wandlers, der mit seinem Eingang (Schaltungspunkt E) an den Ausgang eines optoelektronischen Sensorelements SE geschaltet ist. In Serie zum Eingang E liegt die Source-Drain-Strecke eines Feldeffekttransistors T1, über den E mit dem Eingang E1 eines Inverters verbunden ist. Dieser besteht aus der Serienschaltung eines Schalttransistors T2 undeines Lastelements L, das in Fig. 1 als ein Feldeffekttransistor des Verarmungstyps dargestellt ist, dessen Gate mit dem Schaltungspunkt 1 verbunden ist. Der letztere ist an den Ausgang A des Analog-Digital-Wandlers angeschlossen, während die endseitigen Anschlüsse 2 und 3 der Serienschaltung T2, L an eine Konstantspannung $U_{DD}$ und an ein Bezugspotential, z.B. Masse, geschaltet sind. Zwischen den Punkten 2 und E1 liegt die Source-Drain-Strecke eines Feldeffekttransistors T3. Dieser stellt einen Rücksetztransistor dar, dessen Gate zum Zwecke des Rücksetzens der Schaltungspunkte E1 und E auf ein festes Potential mit einer Taktimpulsspannung $\Phi 1$ beaufschlagt wird. Der Feldeffekttransistor T1 stellt einen Barriere-Transistor dar, dessen Gate mit einer Impulsspannung $\Phi 2$ belegt ist.

Das Sensorelement besteht aus eine Fotodiode FD, deren parallel zum Sensorausgang E liegende Kapazität mit $C_{SE}$ bezeichnet ist. Die am Schaltungspunkt E1 gemessene Eingangskapazität des Inverters T2, L ist in Fig. 1 gestrichelt eingezeichnet und mit dem Bezugszeichen $C_{E1}$ versehen.

Fig. 2 zeigt eine Ausgestaltung des Wandlers, bei der ein die Fotodiode enthaltender Schaltungsteil von Fig. 1 auf einem Halbleiterkörper 4 eines ersten Leitfähigkeitstyps, der z.B. aus p-dotiertem Silizium besteht, integriert ist. Die Fotodiode FD besteht aus einem an der Grenzfläche 5 des Halbleiterkörpers 4 angeordneten Gebiet 6 eines zu dem ersten entgegengesetzten Leitfähigkeitstpys. Der dem Gebiet 6 benachbarte Bereich des Halbleiterkörpers 4 wird von einem Gate 7 überdeckt, das durch eine dünne Isolierschicht 8, z.B. aus $SiO_2$, von der Grenzfläche 5 getrennt ist. Das Gate 7 bildet zusammen mit einem Draingebiet 9 eines zu dem ersten entgegengesetzten Leitfähigkeitstyps den Feldeffekttransistor T1. Das Gebiet 9 stellt gleichzeitig den Eingang E1 des Inverters T2, L und insbesondere auch das Sourcegebiet des Rücksetztransistors T3 dar. Die Schaltungsteile T2, L und T3 sind entsprechend Fig. 1 schematisch dargestellt. Die Eingangskapazität $C_{E1}$ des Inverters ist in gleicher Weise wie in Fig. 1 angedeutet.

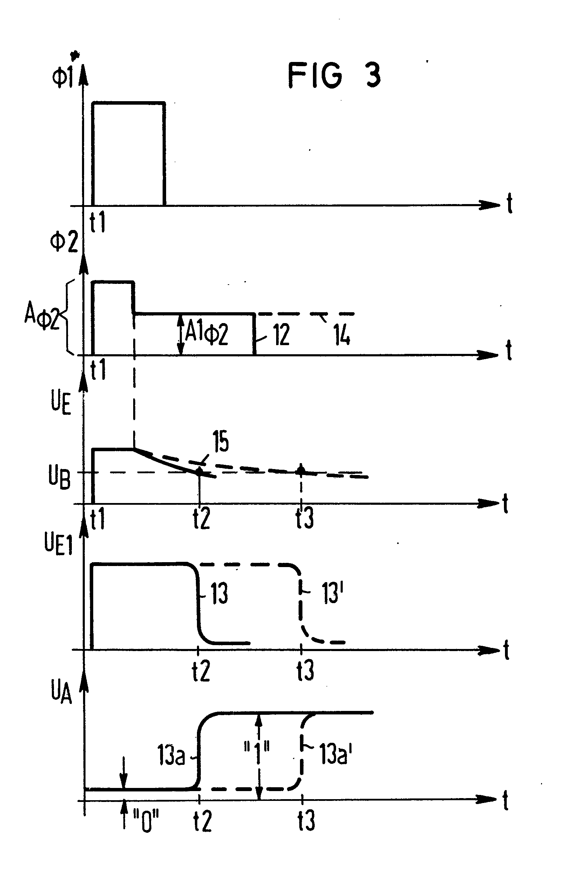

Im Betrieb werden die Schaltungspunkte E1 und E zunächst auf hohe positive Potentiale rückgesetzt. Das geschieht durch einen Taktimpuls $\Phi 1$ und einen Impuls $\Phi 2$ (Fig. 3), die zum Zeitpunkt t1 beginnen und den Rücksetztransistor T3 und den Transistor T1 jeweils in den leitenden Zustand schalten. Die Amplitude von $\Phi 2$ ist kleiner als die von $\Phi 1$, so dass der Transistor T1 im Sättigungsbereich betrieben wird, für den die Beziehung $U_{E1} - U_E > A_{\Phi 2} - U_T - U_E$ gilt. Dabei treten die Spannungen $U_{E1}$ und $U_E$ jeweils an den Schaltungspunkten E1 und E auf, während $A_{\Phi 2}$ die Amplitude des Impulses $\Phi 2$ und $U_T$ die Einsatzspannung des Transistors T1 bedeuten. In diesem Fall wird die Spannung $U_E$ durch $A_{\Phi 2}$ eingestellt, wofür die Beziehung $U_E = A_{\Phi 2} - U_T$ gilt.

Unter dem Einfluss der Spannungen $U_E$, $\Phi 2$ und $U_{E1}$, die beim Rücksetzen dem Gebiet 6, dem Gate 7 und dem Gebiet 9 anliegen, stellen sich jeweils Potentialwerte P6, P7 und P9 des Oberflächenpotential $\Phi_s$ ein, die in Fig. 2 in Richtung des Pfeils 10 eingezeichnet sind. Dabei stellt das obere Ende von 10 das Bezugspotential $P_0$ dar, auf dem sich Halbleiterkörper 4 bei Zuführung einer Substratspannung $U_0$ über den Anschluss 11 befindet.

Anschliessend wird $A_{\Phi2}$ auf einen kleineren Wert $A1_{\Phi2}$ erniedrigt, der zwischen $U_E$ und der Substratspannung $U_0$ liegt. Wenn $A1_{\Phi2}$ unterhalb der Spannung $U_E + U_T$ liegt, so sperrt der Transistor T1, wobei sich unterhalb der Elektrode 7 eine Potentialbarriere P71 ausbildet. Die Potentiale P6 und P9 bleiben hiervon unbeeinflusst, so dass sich der in Fig. 2 ebenfalls eingezeichnete Verlauf P6, P71 und P9 von $\Phi_s$ ergibt.

Wird nun die Fotodiode durch die Öffnung einer Blende mit Lichtstrahlen L1 belichtet, so verringern sich die Spannung $U_E$ (Fig. 3) und das Potential P6 (Fig. 2). Im Verlauf einer vorgegebenen Integrationszeit, deren Ende durch die rückwärtige Flanke 12 von $\Phi2$ bestimmt ist, kann das Potential P6 bei hinreichend starker Belichtung die Potentialbarriere P71 erreichen (Zeitpunkt t2). In Fig. 3 ist dieser Zeitpunkt dadurch bestimmt, dass $U_E$ einen Schwellwert $U_B$ erreicht. Danach fliesst ein Teil der Ladung der Fotodiode FD über P71 in das Gebiet 9 und erniedrigt P9 auf einen Wert P91, wobei die Spannung $U_{E1}$ stark abfällt, wie in Fig. 3 mit 13 angedeutet ist. Die Einsatzspannung von T2 ist so eingestellt, dass sie durch diesen Spannungsabfall 13 von UE1 erreicht wird. Das hat zur Folge, dass T2 sperrt und dass die Spannung $U_A$ am Ausgang A von dem nach dem Rücksetzen abgreifbaren logischen Signal «0», das etwa dem Bezugspotential entspricht, auf das logische Signal «1» umgeschaltet wird, das etwa der Spannung $U_{DD}$ entspricht. Wird dagegen innerhalb der vorgegebenen Integrationszeit wegen einer schwachen Belichtung von FD die Potentialbarriere P71 durch das Potential P6 nicht erreicht, so unterbleibt diese Inverterumschaltung. Damit ist eine logische Bewertung des analogen Sensorsignals, das der Spannung $U_E$ am Ende der Integrationszeit (12) entspricht, durch die digitalen Ausgangssignale «1» und «0» gegeben.

Nach einer Variante der vorstehend beschriebenen Betriebsweise wird der Impuls $\Phi2$ nicht abgeschaltet, so dass in Fig. 3 die gestrichelte Linie 14 an die Stelle der Flanke 12 tritt. Es wird eine Zeitspanne t1 bis t3 ermittelt, nach der auch im Falle einer schwächeren Belichtung (Kurve 15 in Fig. 3) die Spannung $U_E$ den Schwellwert $U_B$ bzw. das Potential P6 die Potentialbarriere P71 erreicht hat. Der Spannungsabfall von $U_{E1}$ (vgl. 13') und die Umschaltung der Spannung $U_A$ von «0» auf «1» (vgl. 13a') erfolgen dann zum Zeitpunkt t3.

Damit ist die Zeitspanne t1 bis t3 ein Mass für die Stärke der Belichtung der Fotodiode FD. Die Spannung $U_A$ mit dem Spannungsanstieg 13a' kann bei anderen, gleichartig aufgebauten Analog-Digital-Wandlern eine Beendigung der Integrationszeit veranlassen, was durch eine Abschaltung des Taktimpulses $\Phi2$ geschehen kann. Die Fotodiode FD des betrachteten Wandlers ist in diesem Fall vorzugsweise so langgestreckt ausgebildet, dass sie neben einer Mehrzahl von den anderen Wandlern zugeordneten Sensorelementen liegt und daher eine optisch erzeugte Ladung aufnimmt, die dem Mittelwert der Belichtung aller dieser Sensorelemente entspricht. Die Zeitspanne t1 bis t3 entspricht dabei einer Integrationszeit, innerhalb der ein Teil der weiteren Wandler, die stärker belichteten Sensorelementen nachgeschaltet sind, auf das Ausgangssignal «1» umgeschaltet werden, während der übrige Teil dieser Wandler, die weniger stark belichteten Sensorelementen zugeordnet sind, nicht umgeschaltet werden und weiterhin das Ausgangssignal «0» abgeben.

Durch eine grosse Kapazität $C_{SE}$ des Sensorelements SE im Vergleich zur Eingangskapazität $C_{E1}$ des Inverters T2, L wird erreicht, dass die Potentialänderung von P9 auf P91 relativ gross ist, so dass die Einsatzspannung $U_T$ von T2 auch bei grösseren herstellungsbedingten Toleranzen während des Spannungsabfalls 13 sicher erreicht wird.

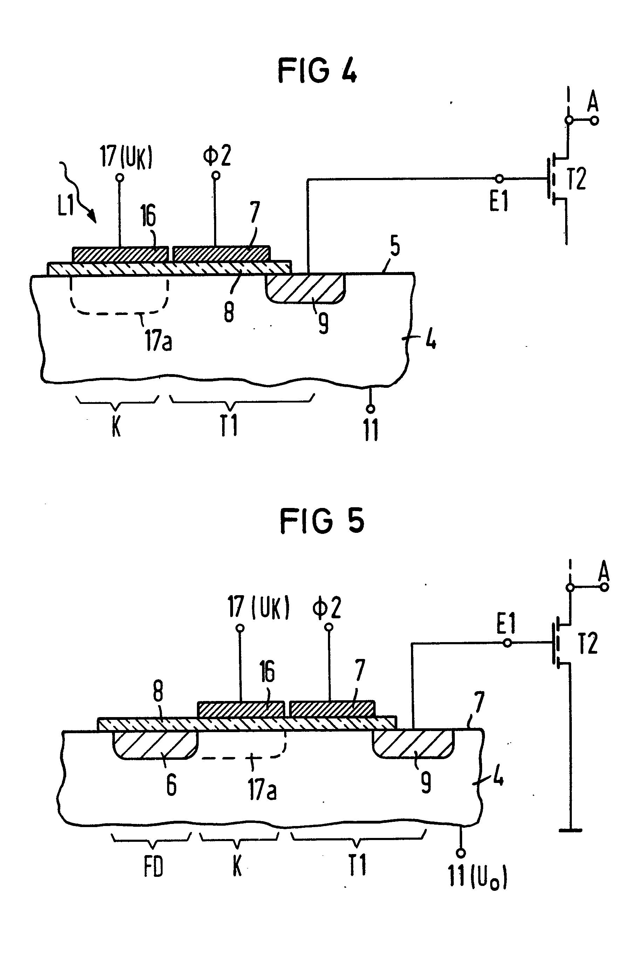

Nach einer anderen Ausgestaltung des Analog-Digital-Wandlers besteht das Sensorelement SE aus einem in Fig. 4 dargestellten MIS-Kondensator K. Dieser besitzt eine Gateelektrode 16, die durch die dünne Isolierschicht 8 von der Grenzfläche 5 des Halbleiterkörpers 4 getrennt ist. Sie ist mit einem Anschluss 17 versehen, der mit einer Konstantspannung $U_K$ beschaltet ist. Unter dem Einfluss von $U_K$ bildet sich unterhalb der Gateelektrode 16 eine mit 17a angedeutete Raumladungszone aus. Die übrigen Schaltungsteile der Fig. 4 entsprechen den mit gleichen Bezugszeichen versehenen Schaltungsteilen der Fig. 3. Die Spannung $U_K$ muss so gewählt werden, dass sich unterhalb der Gateelektrode 16 ein Oberflächenpotential $\Phi_s$ ausbildet, das dem Potentialwert P6 (Fig. 2) gleichkommt oder diesen übersteigt. Der Einsatz eines MIS-Kondensators K als Sensorelement bringt den Vorteil einer grossen Kapazität $C_{SE}$ mit sich.

Fig. 5 zeigt eine weitere Ausgestaltung des Analog-Digital-Wandlers, bei der eine Fotodiode FD gemäss Fig. 2 und ein MIS-Kondensator K gemäss Fig. 4 nebeneinander auf der dünnen Isolierschicht 8 angeordnet sind und zusammen das Sensorelement SE bilden. Die bereits anhand der Figuren 2 und 4 erläuterten Schaltungsteile sind in Fig. 5 mit denselben Bezugszeichen versehen. Die Kapazität $C_{SE}$ ist nach Fig. 5 noch grösser als nach Fig. 4.

Das Lastelement L kann auch aus einem Feldeffekttransistor des Anreicherungstyp bestehen. Dessen Gate ist dann im Gegensatz zu Fig. 1 mit dem Schaltungspunkt 2 verbunden. Ausserdem kann das Gate des das Lastelement L bildenden Feldeffekttransistors unabhängig von seinem Typ mit einem Anschluss verbunden sein, der an einem festen Potential oder an einer Taktimpulsspannung liegt.

Die Schaltung des Analog-Digital-Wandlers nach der Erfindung ist mit besonderem Vorteil wenigstens teilweise auf einem dotierten Halbleiterkörper monolithisch integriert. Bei einem Schaltungsaufbau in n-Kanal-MOS-Technik sind die auf die Substratspannung $U_o$ bezogenen Potential und Spannungen mit einem positiven Vorzeichen versehen. Bei einer p-Kanal-MOS-Technik weisen die Spannungen und Potentiale negative Vorzeichen auf, wobei auch die Leitfähigkeitstypen der dotierten Halbleitergebiete durch die jeweils entgegengesetzten zu ersetzen sind.

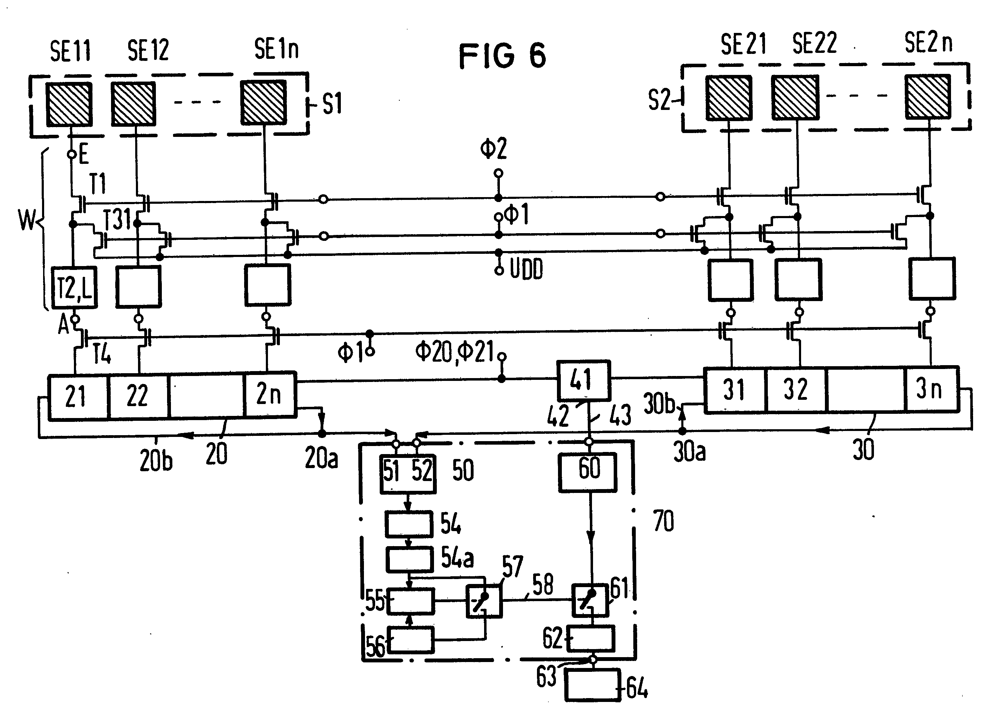

Fig. 6 zeigt eine vorteilhafte Anwendung eines Analog-Digital-Wandlers nach der Erfindung. Dieser entspricht dem mit W bezeichneten Schaltungsteil, der dem Ausgang E eines Sensorelements SE11, z.B. einer Fotodiode, nachgeschaltet ist. Der Ausgang A des Wandlers ist über einen Transfertransistor T4, dessen Gate mit einer Taktimpulsspannung $\Phi 3$ beschaltet ist, mit dem Eingang einer Stufe 21 eines Schieberegisters 20 verbunden. Gleichartige Sensorelemente SE12...SE1n und SE21...SE2n sind über gleichartige Wandler und Transfertransistoren mit den Stufen 22...2n des Schieberegisters 20 und den Stufen 31...3n eines Schieberegisters 30 verbunden. Die Takteingänge der z.B. zweiphasig ausgebildeten, dynamischen Schieberegister 20 und 30 werden mit zwei Taktimpulsspannungen $\Phi 20$, $\Phi 21$ beaufschlagt, die aus Gründen einer einfachen Darstellung über eine einpolig gezeichnete Leitung 40 zugeführt werden. In Serie zu den Takteingängen des Schieberegisters 30 liegt eine Gatterschaltung 41, die einen zweiten Ausgang 42 aufweist, der über eine Leitung 43 mit einem Zähler 60 verbunden ist. Die Ausgänge 20a und 30a der Stufen 2n und 3n sind einerseits über Leitungen 20b und 30b mit den Eingängen der Stufen 21 bzw. 32 verbunden und andererseits mit den Eingängen 51 und 52 einer Schaltung 50, die die Übereinstimmung oder Nichtübereinstimmung der ihr über 20a und 30a zugeführten Signale feststellt. Zweckmässigerweise besteht die Schaltung 50 aus einem Exklusiv-ODER-Gatter. Der Ausgang von 50 ist mit einem Zähler 54 beschaltet. Dessen Ausgang ist über einen Speicher 54a mit dem ersten Eingang eines digitalen Komparators 55 verbunden, dessen zweiter Eingang einem Speicher 56 nachgeschaltet ist. Andererseits ist der Ausgang des Zählers über einen elektronischen Schalter 57, der über den Ausgang des Komparators 55 angesteuert wird, mit dem Speicher 56 verbunden. Der Ausgang des Komparators 55 beeinflusst auch den Steuereingang eines elektronischen Schalters 61, über den der Ausgang des Zählers 60 mit einem Speicher 62 in Verbindung steht. Ein Ausgang 63 des letzteren ist schliesslich mit einer Vorrichtung 64 beschaltet. Die Schaltungsteile 50 bis 57 und 60 bis 63 stellen einen Auswerteteil 70 dar.

Die Sensorelemente SE11...SE1n, die zusammen einen linearen Bildsensor S1 bilden, und die Sensorelemente SE21...SE2n, die zusammen einen zweiten linearen Bildsensor S2 bilden, werden durch die Öffnungen einer Blende mit Lichtstrahlen L1 bzw. L2 belichtet, die von einem Gegenstand getrennt abgeleitet werden, dessen Entfernung zu bestimmen ist. Die getrennten Abbildungen dieses Gegenstandes auf die Ebene von S1 und S2 stehen in einer solchen flächenhaften Zuordnung zu den Bildsensoren S1 und S2, dass diese auf einander entsprechende Zeilen der Abbildungen ausgerichtet sind. Für eine vorgegebene Entfernung des Gegenstandes, z.B. für die Entfernung «unendlich», weisen S1 und S2 gleiche Helligkeitsverläufe über der gesamten Länge der Sensorzeilen auf, so dass an den Ausgängen A abgreifbare, digitalisierte Sensorsignale S1n...S11 und S2n...S21 bei einer seriellen Auslesung in der Reihenfolge der Sensorelemente Signalfolgen ergeben, die eine maximale Korrelation aufweisen. Ändert sich die Entfernung des Gegenstandes, so verschieben sich die auf S1 und S2 ausgerichteten Ausschnitte der einander entsprechenden Zeilen. Dabei wird die Korrelation zwischen den genannten Signalfolgen kleiner. Verschiebt man die seriell ausgelesenen digitalisierten Signalfolgen S1n...S11 und S2n...S21 stufenweise gegeneinander, so kann man diejenige Verschiebung ermitteln, bei der wieder die grösste Korrelation auftritt. Diese Verschiebung ist dann ein Mass für die tatsächliche Entfernung des Gegenstandes.

Zur seriellen Auslesung der Sensorsignale S1n...S11 und S2n...S21 dienen die Schieberegister 20 und 30, in denen die Sensorsignale unter dem Einfluss der Taktimpulsspannungen $\Phi_{20}$, $\Phi_{21}$ jeweils umlaufen. Nach n zu einem ersten Auslesezyklus gehörenden Taktiperioden von $\Phi_{20}$ ist jeweils ein vollständiger Signalumlauf erfolgt, so dass das zu Beginn dieses Zyklus am Ausgang 20a abgeifbare Signal S1n auch am Ende desselben an 20a wieder abgreifbar ist. Analog hierzu ist am Ausgang 30a zu Beginn und am Ende des ersten Auslesezyklus das Signal S2n abgreifbar. Die Gatterschaltung 41 wird nach diesem ersten Ablesezyklus für die Dauer einer Taktperiode von $\Phi_{20}$, $\Phi_{21}$ gesperrt, so dass das Schieberegister 20 um eine Stufe weitergeschaltet wird, während 30 in dem am Ende des ersten Zyklus erreichten Schaltzustand verbleibt. Für einen zweiten Auslesezyklus, der sich an die letztgenannte Taktperiode anschliesst, bedeutet also das Sperren der Gatterschaltung 41, dass von einer neuen gegenseitigen Zuordnung der an 20a und 30a seriell augelesenen Sensorsignale ausgegangen wird, bei der die Signale S1(n–1) und S2n, S1(n–2) und S2(n–1) usw. gleichzeitig an 20a und 30a erscheinen. Der zweite Auslesezyklus läuft also mit einer gegenseitigen Verschiebung der Sensorsignalfolgen um eine Signalbreite ab. Jeder weitere Auslesezyklus beginnt mit einer um jeweils eine Signalbreite vergrösserten Verschiebung der Sensorsignalfolgen gegeneinander.

Die Schaltung 50 gibt für jede während eines vollständigen Signalumlaufes in den Schieberegistern 20 und 30, d.h. während eines vollständigen Auslesezyklus, auftretende Übereinstimmung der logischen Signale «1» und/oder der logischen Signale «0» einen Impuls ab. Der vor Beginn eines jeden Auslesezyklus auf Null rückgesetzte Zähler 54 zählt die Anzahl dieser Übereinstimmungen pro Zyklus. Wird während eines Auslesezyklus in 54 ein höheres Zählergebnis als in den vorhergehenden Auslesezyklen erreicht, so wird über den Komparator 55 ein Steuersignal abgegeben, das die Torschaltung 57 und über die Leitung 58 die Torschaltung 61 jeweils leitend schaltet.

Bei jeder in der Gatterschaltung 41 unterdrückten Taktperiode wird nun über 42 ein Zählimpuls P1, P2 usw. abgeleitet, der über die Leitung 43 dem Zähler 60 zugeführt wird. Durch die Funktion der Torschaltung 61 wird dann jeweils beim Auftreten eines neuen Zählerstandes im Zähler 50, der grösser ist als der bis dahin grösste Zählerstand, der momentane Zählerstand aus dem Zähler 60 in den Speicher 62 übertragen. Dieser momentane Zählerstand entspricht der Anzahl der bis zu diesem Zeitpunkt insgesamt aufgetretenen Zählimpulse P1, P2... und damit der Zahl der bis dahin aufgetretenen relativen Verschiebungen der Signalfolgen S1n...S11 und S2n...S21. Nach n Auslesezyklen ist dann im Speicher 62 ein digitales Signal gespeichert, das der Anzahl der relativen Verschiebungen zwischen den Signalfolgen entspricht, durch die eine maximale Korrelation zwischen denselben erreicht wird. Dieses digitale Signal wird über den Ausgang 63 der Vorrichtung 64 zugeführt, die aus einer die Entfernung des Gegenstandes angebenden Anzeigevorrichtung bestehen kann. Andererseits kann die Vorrichtung 64 auch aus einer Einstellvorrichtung bestehen, die in Abhängigkeit von dem über den Ausgang 63 zugeführten Signal eine Optik auf einen solchen Abstand gegenüber einer Bildebene einstellt, dass eine über die Optik erhaltene Abbildung des Gegenstandes auf die Bildebene fokussiert wird. Derartige Schaltungen können vor allem in fotografischen oder elektronischen Kameras eingesetzt werden.

## Patentansprüche

1. Analog-Digital-Wandler zur Bewertung des Analogsignals eines optoelektronischen Sensorelements (SE), dadurch gekennzeichnet, dass ein Inverter vorgesehen ist, der aus einem Schalttransistor (T2) und einem zu diesem in Serie geschalteten Lastelement (L) besteht, dass das Sensorelement (SE) mit dem Invertereingang (E1) über einen Transistor (T1) verbunden ist, dass der Invertereingang (E1) mit dem Sourceanschluss eines Rücksetztransistors (T3) verbunden ist, dessen Drainanschluss (2) an einer konstanten Spannung ($U_{DD}$) liegt, und dass der das Sensorelement (SE) mit dem Invertereingang (E1) verbindende Transistor (T1) als ein Barrieretransistor ausgebildet ist.

2. Analog-Digital-Wandler nach Anspruch 1, dadurch gekennzeichnet, dass er mit dem Ausgang (E) eines als eine Fotodiode (FD) ausgebildeten Sensorelements (SE) verbunden ist.

3. Analog-Digital-Wandler nach Anspruch 1, dadurch gekennzeichnet, dass er mit dem Ausgang (E) eines als MIS-Kondensator (K) ausgebildeten Sensorelements (SE) verbunden ist.

4. Analog-Digital-Wandler nach Anspruch 1, dadurch gekennzeichnet, dass er mit dem Ausgang (E) eines Sensorelements (SE) verbunden ist, das aus einer Fotodiode (FD) und einem zu dieser benachbarten MIS-Kondensator (K) besteht.

5. Analog-Digital-Wandler nach einem der Ansprüche 1 bis 4, dadurch gekennzeichnet, dass die Kapazität ($C_{SE}$) des Sensorelements (SE) grösser gewählt ist als die Eingangskapazität ($C_{E1}$) des Inverters (T2, L).

6. Analog-Digital-Wandler nach einem der Ansprüche 1 bis 5, dadurch gekennzeichnet, dass das Lastelement (L) aus einem Feldeffekttransistor besteht, dessen Gate mit einem an einer konstanten Spannung oder einer Taktimpulsspannung liegenden Anschluss oder im Falle eines Feldeffekttransistors vom Anreicherungstyp (Verarmungstyp) mit seinem Drainanschluss (Sourceanschluss) verbunden ist.

7. Analog-Digital-Wandler nach einem der Ansprüche 1 bis 6, dadurch gekennzeichnet, dass er wenigstens teilweise auf einem dotierten Halbleiterkörper (4) monolithisch integriert ist.

8. Verfahren zum Betrieb eines Analog-Digital-Wandlers zur Bewertung des Analogsignals eines optoelektronischen Sensorelements (SE) nach einem der Ansprüche 1 bis 7, dadurch gekennzeichnet, dass der Invertereingang (E1) und das Sensorelement (SE) durch Zuführung einer Taktimpulsspannung ($\Phi1$) an das Gate des Rücksetztransistors (T3) und einer Impulsspannung ($\Phi2$) an das Gage des Barrieretransistors (T1) auf ein hohes Potential rückgesetzt werden, dass die Impulsspannung ($\Phi2$) anschliessend so weit abgesenkt wird, dass unterhalb des Gate des Barrieretransistors (T1) eine durch die Impulsspannung ($\Phi2$) einstellbare Potentialbarriere (P71) entsteht, und dass die nach dem Abschalten der Taktimpulsspannung ($\Phi1$) im Sensorelement (SE) angesammelten, optisch erzeugten Ladungsträger nach dem Überwinden der Potentialbarriere (P71) zum Umschalten des Inverters (T2, L) herangezogen werden.

9. Verfahren nach Anspruch 8, dadurch gekennzeichnet, dass die Impulsspannung ($\Phi2$) zu einem vorgegebenen Zeitpunkt abgeschaltet wird, so dass der Barrieretransistor (T1) zu diesem Zeitpunkt sperrt.

10. Analog-Digital-Wandler nach einem der Ansprüche 1 bis 7, gekennzeichnet durch die Anwendung bei einem mit zwei linearen Bildsensoren (S1, S2) versehenen Entfernungsmesser, bei dem die analogen Ausgangssignale der Sensorelemente in einer Mehrzahl solcher Wandler (W) digitalisiert und einem Auswerteteil (70) zugeführt werden, der die Ausgangssignale (S1n...S11, S2n...S21) beider Bildsensoren (S1, S2) nach ihrer Korrelation bewertet.

## Claims

1. An analogue-digital converter for evaluating the analogue signal of an opto-electronic sensor element (SE), characterised in that an inverter is provided which comprises a switching transistor (T2) and a load element (L) connected in series therewith, that the sensor element (SE) is connected to the inverter input (E1) via a transistor (T1), that the inverter input (E1) is connected to the source terminal of a reset transistor (T3) whose drain terminal (2) is connected to a constant voltage ($U_{DD}$), and that the transistor (T1) which connects the sensor element (SE) to the inverter input (E1) is designed as a barrier transistor.

2. An analogue-digital converter as claimed in claim 1, characterised in that it is connected to the output (E) of a sensor element (SE) which is designed as a photo-diode (FD).

3. An analogue-digital converter as claimed in claim 1, characterised in that it is connected to the output (E) of a sensor element (SE) which is designed as an MIS-capacitor (K).

4. An analogue-digital converter as claimed in claim 1, characterised in that it is connected to the output (E) of a sensor element (SE) which comprises a photo-diode (FD) and an adjoining MIS-capacitor (K).

5. An analogue-digital converter as claimed in one of the claims 1 to 4, characterised in that the capacitance ($C_{SE}$) of the sensor element (SE) is selected to be greater than the input capacitance ($C_{E1}$) of the inverter (T2, L).

6. An analogue-digital converter as claimed in one of the claims 1 to 5, characterised in that the load element (L) comprises a field effect transistor whose gate is connected to a terminal which is connected to a constant voltage or a clock pulse voltage or – in the case of a field effect transistor of the enhancement type (depletion type) is connected to its drain terminal (source terminal).

7. An analogue-digital converter as claimed in one of the claims 1 to 6, characterised in that it is at least partially monolithically integrated on a doped semiconductor body (4).

8. A method of operating an analogue-digital converter for evaluating the analogue signal of an opto-electronic sensor element (SE) as claimed in one of the claims 1 to 7, characterised in that the inverter input (E1) and the sensor element (SE)are reset to a high potential by supplying a clock pulse voltage ($\Phi1$) to the gate of the reset transistor (T3) and by supplying a pulse voltage ($\Phi2$) to the gate of the barrier transistor (T1), that the pulse voltage ($\Phi2$) is then reduced to such an extent that a potential barrier (P71), which is adjustabel by the pulse voltage ($\Phi2$), is produced beneath the gate of the barrier transistor (T1), and that when the potential barrier (P71) has been overcome, the optically produced charge carriers which have accumulated in the sensor element (SE) following the disconnection of the clock pulse voltage ($\Phi1$), are used to switch over the inverter (T2, L).

9. A method as claimed in claim 8, characterised in that the pulse voltage reference ($\Phi2$) is disconnected at a predetermined time so that the barrier transistor (T1) is blocked at this time.

10. An analogue-digital converter as claimed in one of the claims 1 to 7, characterised by its use in a range measuring device provided with two linear image sensors (S1, S2), where the analogue output signals of the sensor elements are digitalised in a plurality of such converters (W) and are fed to an analysis section (70) which evaluates the output signals (S1n...S11, S2n...S21) of the two image sensors (S1, S2) in accordance with their correlation.

**Revendications**

1. Convertisseur analogique-numérique pour l'évaluation du signal analogique d'un élément capteur opto-électronique (SE), caractérisé en ce qu'il comprend un inverseur constitué d'un transistor de commutation (T2) et d'un élément de charge (L) monté en série avec lui, que l'élément capteur (SE) est relié à l'entrée (E1) de l'inverseur à travers un transistor (T1), que l'entrée (E1) de l'inverseur est reliée à la borne de source d'un transistor (T3) de remise à l'état initial, à la borne de drain (2) duquel est appliquée une tension constante ($U_{DD}$), et que le transistor (T1) reliant l'élément capteur (SE) à l'entrée (E1) de l'inverseur est réalisé comme un transistor barrière.

2. Convertisseur selon la revendication 1, caractérisé en ce qu'il est relié à la sortie (E) d'un élément capteur (SE) réalisé comme une photo-diode (FD).

3. Convertisseur selon la revendication 1, caractérisé en ce qu'il est relié à la sortie (E) d'un élément capteur (SE) réalisé comme un condensateur MIS (K).

4. Convertisseur selon la revendication 1, caractérisé en ce qu'il est relié à la sortie (E) d'un élément capteur (SE) constitué d'une photodiode (FD) et d'un condensateur MIS (K) voisin de clui-ci.

5. Convertisseur selon une des revendications 1 à 4, caractérisé en ce que la capacité ($C_{SE}$) de l'élément capteur (SE) est choisie plus grande que la capacité d'entrée ($C_{E1}$) de l'inverseur (T2, L).

6. Convertisseur selon une des revendications 1 à 5, caractérisé en ce que l'élément de charge (L) consiste en un transistor à effet de champ dont la grille est reliée à une borne à laquelle est appliquée une tension constante ou une tension d'impulsion d'horloge ou, dans le cas d'un transistor à effet de champ du type à enrichissement (du type à déplétion), à sa borne de drain (borne de source).

7. Convertisseur selon une des revendications 1 à 6, caractérisé en ce qu'il est au moins partiellement intégré monolithiquement sur un corps semi-conducteur (4) dopé.

8. Procédé d'exploitation d'un convertisseur analogique-numérique pour l'évaluation du signal analogique d'un élément capteur opto-électronique (SE) selon une des revendications 1 à 7, caractérisé en ce que l'entrée (E1) de l'inverseur et l'élément capteur (SE) sont remis à un potentiel élevé par application d'une tension d'impulsion d'horloge ($\Phi1$) à la grille du transistor de remise à l'état inital (T3) et d'une tension d'impulsion ($\Phi2$) à la grille du transistor barrière (T1), que la tension d'impulsion ($\Phi2$) est ensuite abaissée à tel point qu'il se forme sous la grille du transistor barrière (T1) une barrière de potentiel (P71) réglable par la tension d'impulsion ($\Phi2$) et que les

porteurs de charge, produits optiquement, qui s'accumulent dans l'élément capteur (SE) après la coupure de la tension d'impulsion d'horloge ($\Phi1$), sont utilisés, après avoir vaincu la barrière de potentiel (P71), pour la commutation de l'inverseur (T2, L).

9. Procédé selon la revendication 8, caractérisé en ce que la tension d'impulsion ($\Phi2$) est coupée à un moment préfixé, de sorte que le transistor barrière (T1) bloque à ce moment.

10. Convertisseur analogique-numérique selon une des revendications 1 à 7, caractérisé par son application à un télémètre équipé de deux capteurs d'image linéaires (S1, S2), sur lequel les signaux de sortie analogiques des éléments capteurs sont numérisés dans un certain nombre de ces convertisseurs (W) et sont appliqués à une partie d'évaluation (70) qui évalue les signaux de sortie ($S1n...S11$, $S2n...S21$) des deux capteurs d'image (S1, S2) selon leur corrélation.

0 026 834

## FIG 1

## FIG 2

9

# FIG 3

# FIG 4

# FIG 5

FIG 6